Europäisches Patentamt

European Patent Office

Office européen des brevets

(11) Veröffentlichungsnummer: **0 279 773**
A2

(12) **EUROPÄISCHE PATENTANMELDUNG**

(21) Anmeldenummer: 88730038.2

(22) Anmeldetag: 17.02.88

(51) Int. Cl.⁴: **B 44 B 5/02**
B 21 H 7/00

(30) Priorität: 18.02.87 DE 3705100

(43) Veröffentlichungstag der Anmeldung:
24.08.88 Patentblatt 88/34

(84) Benannte Vertragsstaaten:
BE DE ES FR GB IT LU NL

(71) Anmelder: J. H. Benecke GmbH
Beneckeallee 40
D-3000 Hannover 1 (DE)

(72) Erfinder: Kupillas, Max Dipl.-Ing.
Fuhrenkamp 23
D-3004 Isernhagen 4 (DE)

(74) Vertreter: Thömen, Uwe, Dipl.-Ing.
Patentanwalt U. Thömen Zeppelinstrasse 5
D-3000 Hannover 1 (DE)

(54) Verfahren und Vorrichtung zur Herstellung einer Oberflächenstruktur von Prägewalzen sowie Prägewalze und damit geprägte Folie.

(57) Um die Oberflächen von Folien insbesondere auf dem Gehäusesektor mit einer Oberflächenstruktur zu versehen, werden zur Verformung der Folien Prägewalzen verwendet, deren Oberflächen die gewünschte Oberflächenstruktur besitzen.

Zur Herstellung der entsprechenden Oberflächenstruktur der Prägewalze werden Stahlkugeln auf die glatte Oberfläche der Prägewalze geschossen. Durch ein chaotisches Einschlagen der Stahlkugeln auf der glatten Oberfläche entstehen ungerichtete kalottenartige Vertiefungen, die beim Prägen von Kunststoff-Folien eine von Schlieren und Streifenmustern befreite Oberflächenstruktur erzeugen.

Fig.1

EP 0 279 773 A2

Bundesdruckerei Berlin

## Beschreibung

### Verfahren und Vorrichtung zur Herstellung einer Oberflächenstruktur von Prägewalzen sowie Prägewalze und damit geprägte Folie

Die Erfindung betrifft ein Verfahren und eine Vorrichtung zur Herstellung einer Oberflächenstruktur von Prägewalzen gemäß dem Oberbegriff des Anspruchs 1. Außerdem befaßt sich die Erfindung mit einer nach dem Verfahren hergestellten Prägewalze und einer damit geprägten Folie.

In vielen Bereichen der Technik werden bekanntlich Folien verwendet, deren Oberflächen nicht vollständig glatt ausgebildet, sondern mit einer Struktur versehen sind. Insbesondere in der Elektroindustrie werden bei Gehäusen für Lautsprecher, Radios, Fernseher, Computer usw. Folien mit einer Strukturoberfläche verwendet.

Für die Herstellung solcher vorzugsweise auf PVC-Basis gefertigter Folien kommen Prägewalzen zum Einsatz. Die Prägewalzen besitzen ihrerseits eine Oberflächenstruktur, die in bekannter Weise durch Pressen auf die plastisch verformbare Folie übertragen wird. Dies geschieht dadurch, daß die Folie zwischen der Prägewalze und einer gegenüberliegenden Gummiwalze, die als Gegendruckwalze dient, hindurchgeführt wird, wobei die Folienoberfläche entsprechend der Oberflächenstruktur der Prägewalze eine Verformung erfährt.

Die Herstellung der bekannten Prägewalzen ist in der Praxis sehr aufwendig und nachteilig und wird bis heute von einem Graveur von Hand oder maschinell durchgeführt. Zunächst erfolgt die Anfertigung einer Molette als Gegenwalze. Die Molette ist eine negative Konturenwalze, die dazu dient, die eigentliche Prägewalze herzustellen.

Anfangs ist die Oberfläche der Molette vollständig glatt ausgebildet, und der Graveur stellt dann z.B. von Hand durch Punzen das Oberflächenmuster auf der Molette her.

Das Punzen erfordert naturgemäß sehr viel Geschick, und es ist ohne weiteres verständlich, daß sich ein gleichmäßiges Oberflächenmuster nur äußerst schwer erzeugen läßt. Zudem lassen sich nur relativ gerichtete Vertiefungen von Hand aufbringen. Bei besonders stark ausgeprägten Oberflächenstrukturen wird zusätzlich mit einer Säure gearbeitet, um die "Löcher" auf der Oberfläche der Molette zu vertiefen.

Aus Kosten- und Zeitgründen ist die axiale Längenabmessung der Molette übrigens begrenzt. Bei dem bekannten Verfahren zur Herstellung einer Prägewalze wird daher die relativ kurze und als negative Konturenwalze dienende Molette als Gegenwalze mehrfach in nebeneinander liegenden Bereichen auf der Oberfläche der zu erzeugenden Prägewalze abgerollt, bis diese über ihre gesamte Länge mit der Oberflächenstruktur versehen ist. Hierbei besteht nun der Nachteil, daß sich zwischen den einzelnen benachbarten Bereichen sogenannte Molettenübergänge bilden, die eine störende Streifenstruktur nach sich ziehen können.

Abgesehen von dem soweit beschriebenen aufwendigen Verfahren zur Herstellung einer Oberflächenstruktur von Prägewalzen ergeben sich auch bei den mit einer solchen Walze geformten Folien erhebliche Nachteile. So ist häufig zu beobachten, daß sich die mit einer Oberflächenstruktur versehenen Folien nur schwer reinigen lassen, weil gelöste Schmutzpartikel nicht vollständig von der rauhen Oberfläche entfernt werden können. Dies ist unmittelbar auf die Oberflächenstruktur der Prägewalze zurückzuführen, die sogenannte Plateaus mit scharfen Kanten zu den benachbarten Vertiefungen besitzt. Ferner ist bei den bekannten Folien eine schlechte Kratzfestigkeit zu beobachten.

Ein weiterer Nachteil besteht darin, daß - wenn die Folie mit Metallpigmenten eingefärbt ist - die bekannten Prägewalzen leicht Fließstrukturen (Wendeln) hervorheben, die tannenbaumartig verlaufen und sich optisch störend als Schlieren in Längsrichtung bemerkbar machen. Optisch können die Wendeln dabei auch als störende Farbunterschiede auftreten.

Zur Vermeidung der geschilderten Nachteile liegt der Erfindung die Aufgabe zugrunde, ein Verfahren und eine Vorrichtung zur Herstellung von Oberflächenstrukturen von Prägewalzen anzugeben, welche den Einsatz von Prägewalzen für die Verformung von Folien mit optisch sauberen Oberflächenstrukturen erlaubt, welche frei von störenden Molettenübergängen sind.

Die Lösung dieser Aufgabe erfolgt bei dem im Oberbegriff des Anspruchs 1 genannten Verfahren und bei der Vorrichtung gemäß dem Oberbegriff des Anspruchs 7 durch die in den kennzeichnenden Teilen angegebenen Merkmale.

Bei der Erfindung wird in vorteilhafter Weise bei der Herstellung einer Prägewalze darauf verzichtet, zuvor eine Molette als negative Konturenwalze zu fertigen. Bereits dadurch ergibt sich eine beachtliche Kosten- und Zeitersparnis. Außerdem fallen dadurch die nachteiligen Molettenübergänge weg.

Die Oberflächenstruktur der Prägewalze wird in überraschend einfacher Weise durch ein Beschießen der zunächst glatten Oberfläche der Prägewalze mit kleinen harten Formkörpern erzeugt. Insbesondere bei der Verwendung von kleinen Stahlkugeln ergibt sich dabei eine Oberflächenstruktur ohne die weiter oben erwähnten nachteiligen Plateaus und scharfen Kanten. Vielmehr stellen sich relativ weiche Übergänge durch runde Kuppen und Löcher ein, so daß die entsprechende Oberflächenstruktur einer geformten Folie sich problemlos reinigen läßt.

Bei der Vorrichtung zur Durchführung des Verfahrens ist eine in Richtung der Achse der Prägewalze verschiebbare Schießeinrichtung für die Formkörper vorgesehen, wobei die Prägewalze um die Achse drehbar ist. Die kleinen Formkörper können mit der Schießvorrichtung auf einen Teilbereich der Oberfläche der Prägewalze geschossen werden, wobei sich dann die Prägewalze um ihre Achse dreht und die Schießvorrichtung gleichzeitig in Achsrichtung verschoben wird. Der Vorteil dieser Vorrichtung besteht darin, daß sich über die gesamte Achslänge der Prägewalze eine gleichmäßige Struktur ohne störende Übergänge erzeugen läßt. Dadurch sind bei den mit der neuen Prägewalze hergestellten Folien die optisch störenden Wendeln vermieden. Die Erfindung betrifft außerdem eine Prägewalze mit einer Oberflächenstruktur gemäß dem Oberbegriff des Patentanspruchs 10, und diesbezüglich liegt ihr die Aufgabe zugrunde, eine Prägewalze zu schaffen, dessen Oberflächenstruktur eine optisch einwandfreie Verformung von Folien ermöglicht. Die Lösung dieser Aufgabe erfolgt durch die im kennzeichnenden Teil des Patentan spruchs 10 angegebenen Merkmale.

Bei der neuen Prägewalze ist die Oberflächenstruktur durch ungerichtete kalottenartige Vertiefungen auf der Oberfläche der Prägewalze gebildet, wobei diese Struktur eine ungerichtete, streifen- und vorschubfreie Oberflächenstruktur einer gepägten Folie ergibt.

In zweckmäßiger Ausgestaltung ist die Gravurtiefe (Rauhtiefe) $R_A$ größer als 2,0 µm, und der Wert für $R_{MAX}$ liegt bei etwa größer 20,0 µm. Mit einer solchen Gravur lassen sich insbesondere auf dem Gehäusesektor alle gängigen und gewünschten Oberflächenstrukturen ohne weiteres herstellen.

Die Erfindung befaßt sich ferner mit thermoplastischen Polymeren, insbesondere mit mittels Prägewalzen verformbaren Folien auf PVC-Basis, und diesbezüglich liegt der Erfindung die Aufgabe zugrunde, thermoplastische Polymere mit einer verformten Oberflächenstruktur zu schaffen, die ein gleichmäßiges Oberflächenbild bietet und eine gute Kratzfestigkeit besitzt und sich problemlos reinigen läßt. Dieses Ziel erreicht die Erfindung durch die Merkmale des Patent anspruchs 13.

Da die Struktur der Oberfläche durch ungerichtete kalottenartige Vertiefungen mit weichen Übergängen gebildet ist, ergibt sich ein optisch gleichmäßiges Bild, welches keine bestimmte Muster- oder Streifenstruktur sowie auch keine störenden Schlieren erkennen läßt. Die weichen Übergänge der kalottenartigen Vertiefungen ohne scharfe Kanten ermöglichen zudem eine problemlose Reinigung.

Andere vorteilhafte Ausgestaltungen der Erfindung ergeben sich aus den Unteransprüchen, der Zeichnung und der nachfolgenden Beschreibung.

Nachfolgend wird die Erfindung zum besseren Verständnis beispielhaft anhand der Zeichnung erläutert. Es zeigen:

Fig. 1 eine schematische Ansicht einer Vorrichtung zur Herstellung einer Oberflächenstruktur auf einer Prägewalze,

Fig. 2 eine stark vergrößerte schematische Querschnittsansicht einer Oberflächenstruktur der Prägewalze, und

Fig. 3 eine dreidimensionale Darstellung eines Ausschnittes einer Folie, deren Oberflächenstruktur mit einem Rauhtiefenmeßgerät ermittelt wurde.

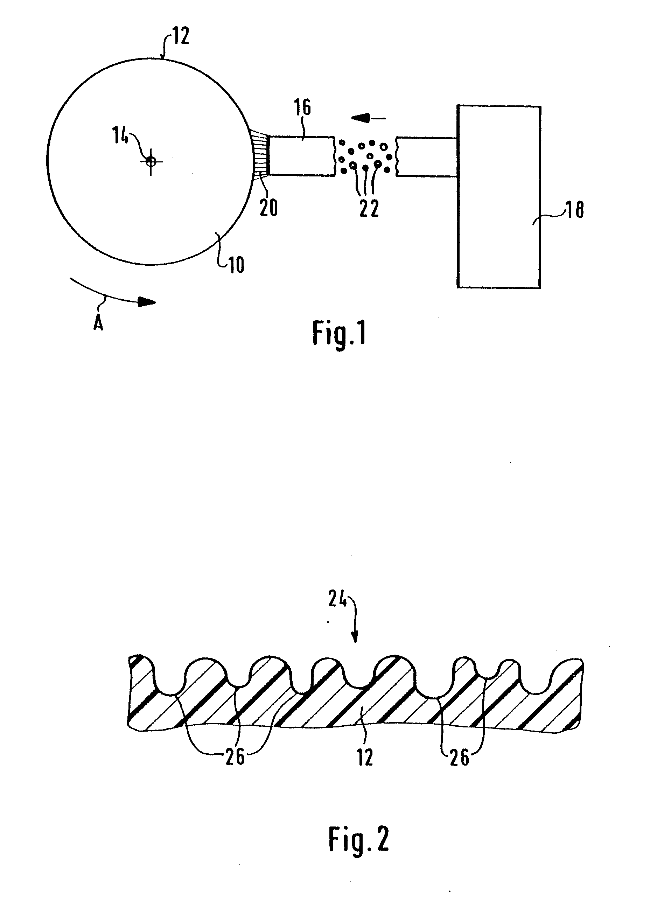

In Fig. 2 ist eine zunächst mit einer glatten Oberfläche 12 versehene Prägewalze 10 aus Metall dargestellt. Durch den Pfeil A ist angedeutet, daß die Prägewalze 10 um ihre senkrecht zur Zeichenebene verlaufende Achse 14 gedreht wird.

Im Abstand von der Prägewalze 10 bzw. von dessen Oberfläche 12 ist seitlich ein Rohr 16 angeordnet, welches mit einer Schießvorrichtung 18 in Verbindung steht. Von der Schießvorrichtung 18 her werden kleine Stahlkugeln 22 durch das Rohr 16 hindurch auf die Oberfläche 12 der sich drehenden Prägewalze 10 geschossen. Während sich die Prägewalze 10 mit 150 U/min dreht, bewegt sich die Schießvorrichtung 18 zusammen mit dem Rohr 16 senkrecht zur Zeichenebene längs der Achse 14. Der Vorschub beträgt dabei etwa 50 mm/min. Somit wird die gesamte Oberfläche der Prägewalze 10 erfaßt.

An seinem der Prägewalze 10 zugewandten Ende besitzt das Rohr 16 eine Schutzbürste 20, die praktisch eine elastische Verlängerung des Rohrmantels bildet. Durch die Schutzbürste 20 wird ein unkontrolliertes Wegspritzen der Stahlkugeln verhindert. Für das Aufschießen der Stahlkugeln 22, deren Durchmesser zwischen 0,5 mm und 3,0 mm beträgt, auf die weiche und glatte Oberfläche 12 kann beispielsweise ein Sandstrahlgerät verwendet werden, bei welchem an Stelle von Sand die Stahlkugeln zum Einsatz kommen.

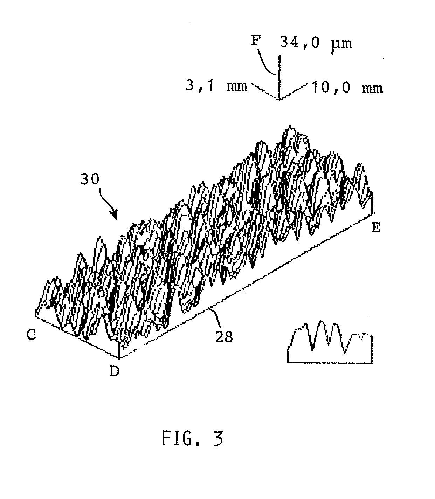

Durch ein chaotisches Einschlagen der Stahlkugeln 22 auf die Oberfläche 12 entstehen ungerichtete, kalottenartige Vertiefungen, die beim späteren Prägen einer Folie 28 (vgl. Fig. 3) mittels der Prägewalze 10 eine ungerichtete, streifen- und vorschubfreie Oberflächenstruktur mit runden Kuppen ergeben.

Fig. 2 zeigt in stark vergrößerter Darstellung eine schematische Querschnittsansicht zur Verdeutlichung einer durch das Einschlagen der Stahlkugeln erzeugten Oberflächenstruktur 24 mit kalottenartigen Vertiefungen 26. Ersichtlich weist die Oberflächenstruktur 24 runde Kuppen unter Vermeidung von scharfen Kanten auf. Dies ist von Vorteil, weil sich eine mit einer solchen Prägewalze 10 geformte Folie problemlos reinigen läßt.

Durch Wahl der Härte der glatten Oberfläche 12 der Prägewalze 10 sowie durch unterschiedliche Geschwindigkeiten der einschlagenden Stahlkugeln 22 kann mit einfachen Mitteln die gewünschte Gravurtiefe beeinflußt werden.

In Fig. 3 ist die Struktur der Oberfläche einer Folie 28 gezeigt. Die Darstellung wurde mit Hilfe eines Rauhtiefenmeßgerätes gewonnen, mit welchem die Oberfläche 30 der Folie 28 mechanisch abgetastet worden ist.

Die Kanten des Ausschnittes der Folie 28 sind mit C, D und E bezeichnet. Die Strecke zwischen den Eckpunkten C und D entspricht einem Abstand von 3,1 mm, und die Strecke zwischen den Eckpunkten D und E beträgt 10,0 mm. Die oben in Fig. 3 angedeutete Strecke F repräsentiert einen Wert von 34,0 µm.

Die Oberfläche 30 der Folie 28 ist durch kalottenartige Vertiefungen mit runden weichen Übergängen gebildet, die in der Zeichnung allerdings aufgrund des Meßverfahrens nicht so genau zu erkennen sind. Es ist nämlich zu berücksichtigen, daß mit dem verwendeten Rauhtiefenmeßgerät bei der Strecke CD 32 Einzelschritte zu jeweils 0,1 mm abgetastet worden sind, weshalb sich in der graphischen Darstellung bedingt durch diese diskreten Schritte Sprünge zwischen den einzelnen Meßwerten zeigen. Gleichwohl ist eindeutig zu erkennen, daß scharfe Kanten bei der Oberflächenstruktur vermieden sind.

## Patentansprüche

1. Verfahren zur Herstellung einer Oberflächenstruktur von Prägewalzen für die Bearbeitung plastisch verformbarer Materialien, insbesondere zum Prägen plastisch verformbarer Folien auf PVC-Basis, dadurch gekennzeichnet, daß kleine harte Formkörper (22) auf die weiche glatte Oberfläche (12) der Prägewalze (10) geschossen werden, wobei durch das ungeordnete chaotische Einschlagen der Formkörper (22) ungerichtete Vertiefungen (26) auf der Oberfläche (12) der Prägewalze (10) entstehen.

2. Verfahren nach Anspruch 1, dadurch gekennzeichnet, daß als Formkörper (22) Stahlkugeln verwen det und auf die Oberfläche (12) der Prägewalze (10) geschossen werden, und daß die Stahlkugeln (22) ungeordnet chaotisch einschlagen und ungerichtete kalottenartige Vertiefungen (26) auf der Oberfläche (12) der Prägewalze (10) erzeugen.

3. Verfahren nach Anspruch 2, dadurch gekennzeichnet, daß Stahlkugeln (22) mit einer Härte von etwa 220 - 260 HV (Vickerhärte) verwendet werden.

4. Verfahren nach Anspruch 2 oder 3, dadurch gekennzeichnet, daß Stahlkugeln (22) mit einem Durchmesser von etwa 0,5 mm - 3,0 mm verwendet werden.

5. Verfahren nach einem der vorhergehenden Ansprüche 1 - 4, dadurch gekennzeichnet, daß die Formkörper (22) mittels Luftdruck auf die Oberfläche (12) der Prägewalze (10) geschossen werden.

6. Verfahren nach einem der vorhergehenden Ansprüche 1 - 5, dadurch gekennzeichnet, daß die Formkörper (22) etwa senkrecht auf die Oberfläche (12) der Prägewalze (10) geschossen werden.

7. Vorrichtung zur Durchführung des Verfahrens nach einem der vorherigen Ansprüche 1 - 6, dadurch gekennzeichnet, daß eine in Richtung der Achse (14) der Prägewalze (10) verschiebbare Schießeinrichtung (18) für die Formkörper vorgesehen ist, wobei die Prägewalze um die Achse (14) drehbar ist.

8. Vorrichtung nach Anspruch 7, dadurch gekennzeichnet, daß das Drehen der Prägewalze (10) mit 150 U/min und das Verschieben der Schießeinrichtung (18) mit etwa 50 mm/min erfolgt.

9. Vorrichtung nach Anspruch 7 und/oder 8, dadurch gekennzeichnet, daß die Oberflächenstruktur (24) in einem ununterbrochenen Arbeitsgang durch das Einschlagen der Formkörper (22) in die Oberfläche (12) der Prägewalze (10) hergestellt wird.

10. Prägewalze mit einer Oberflächenstruktur für die Bearbeitung plastisch verformbarer Materialien, insbesondere zum Prägen plastisch verformbarer Folien auf PVC-Basis, dadurch gekennzeichnet, daß die Oberflächenstruktur (24) durch ungerichtete kalottenartige Vertiefungen (26) auf der Oberfläche (12) der Prägewalze (10) gebildet ist, die beim Prägen eine ungerichtete, streifen- und vorschubfreie Struktur der Oberfläche (12) des geprägten Materials ergeben.

11. Prägewalze nach Anspruch 10, dadurch gekennzeichnet, daß die Gravurtiefe (Rauhtiefe) $R_A$ etwa > 2,0 µm und $R_{MAX}$ etwa > 20,0 µm beträgt ($R_A$ = Mittenrauhwert; A = arithmetischer Mittelwert).

12. Prägewalze nach Anspruch 10 oder 11, dadurch gekennzeichnet, daß die Prägewalze (10) aus Metall besteht.

13. Thermoplastisches Polymer, insbesondere Folie auf PVC-Basis, mit einer strukturierten Oberfläche, dadurch gekennzeichnet, daß die Struktur der Oberfläche (30) durch ungerichtete kalottenartige Vertiefungen mit weichen Übergängen gebildet ist.

Fig.1

Fig.2

0279773

F  34,0 µm

3,1 mm          10,0 mm

30

C

28

D

E

FIG. 3